# EUROPÄISCHE PATENTANMELDUNG

(11) **EP 1 410 949 A2**
(43) Veröffentlichungstag der Anmeldung: **21.04.2004**
(21) Anmeldenummer: 03022737.5
(22) Anmeldetag: 09.10.2003
(51) Int. Cl.: B60Q 1/26, B60Q 11/00

(54) **Beleuchtungseinrichtung insbesondere für Kraftfahrzeuge**

(30) Priorität: 16.10.2002 DE 10248238
(71) Anmelder: Delphi Technologies, Inc., Troy, MI 48007 (US)
(72) Erfinder: Larisch, Markus, 46514 Schermbeck (DE); Bäumer, Peter, 44879 Bochum (DE); Krause, Harald, 45525 Hattingen (DE)
(74) Vertreter: Manitz, Finsterwald & Partner GbR

(57) **Zusammenfassung**

Eine Beleuchtungseinrichtung (10) insbesondere für Kraftfahrzeuge besitzt eine mehrere Leuchtdioden (12') umfassende Diodenanordnung (12), eine Streuscheibe (14) oder dergleichen, die das von der Leuchtdiodenanordnung (12) emittierte Licht teilweise durchlässt und teilweise zur Leuchtdiodenanordnung (12) zurückreflektiert, und eine der Leuchtdiodenanordnung (12) zugeordnete Steuer- und/oder Auswerteeinheit (18), durch die die Dioden (12') der Leuchtdiodenanordnung (12) so ansteuerbar sind, dass eine jeweilige Diode (12') abwechselnd als Leuchtdiode und als Fotodiode betrieben wird, wobei in jeder Phase jeweils wenigstens eine Diode (12') als Leuchtdiode und wenigstens eine Diode (12') als Fotodiode betrieben wird, und wobei das Ausgangssignal einer jeweiligen als Fotodiode betriebenen Diode (12') der Steuer- und/oder Auswerteeinheit zur Auswertung zugeführt wird.

## Beschreibung

Die Erfindung betrifft eine Beleuchtungseinrichtung insbesondere für Kraftfahrzeuge, mit einer mehrere Leuchtdioden umfassenden Diodenanordnung. Sie betrifft ferner ein Verfahren zum Betreiben und/oder Überwachen einer solchen Beleuchtungseinrichtung.

Angesichts des zunehmenden Einsatzes von Leuchtdioden in sicherheitsrelevanten Beleuchtungseinheiten von Kraftfahrzeugen und der Forderung nach einer Überwachung solche Einheiten (z.B. Blinker) besteht ein Bedarf an neuartigen Diagnoseeinrichtungen und -verfahren, da herkömmliche, auf einer Stromüberwachung basierende Verfahren für Leuchtdioden-Arrays nur bedingt einsetzbar sind.

Der Erfindung liegt daher die Aufgabe zugrunde, eine verbesserte Beleuchtungseinrichtung sowie ein verbessertes Verfahren der eingangs genannten Art anzugeben, mit denen auf möglichst einfache und wirtschaftliche Weise insbesondere auch eine zuverlässige Überwachung der Leuchtdiodenanordnung gewährleistet ist.

Diese Aufgabe wird erfindungsgemäß gelöst durch eine Beleuchtungseinrichtung, insbesondere für Kraftfahrzeuge, mit einer mehrere Leuchtdioden umfassenden Diodenanordnung, einer Streuscheibe oder dergleichen, die das von der Leuchtdiodenanordnung emittierte Licht teilweise durchlässt und teilweise zur Leuchtdiodenanordnung zurückreflektiert, und einer der Leuchtdiodenanordnung zugeordneten Steuer- und/oder Auswerteeinheit, durch die die Dioden der Leuchtdiodenanordnung so ansteuerbar sind, dass eine jeweilige Diode abwechselnd als Leuchtdiode und als Fotodiode betrieben wird, wobei in jeder Phase jeweils wenigstens eine Diode als Leuchtdiode und wenigstens eine Diode als Fotodiode betrieben wird, und wobei das Ausgangssignal einer jeweiligen als Fotodiode betriebenen Diode der Steuer- und/oder Auswerteeinheit zur Auswertung zugeführt wird.

Aufgrund dieser Ausbildung ist eine optimale Fehlerdiagnose der Leuchtdiodenanordnung sichergestellt, wobei zur Diagnose oder Überwachung der Eigenschaft der Dioden ausgenutzt wird, dass diese sowohl als Leuchtdiode (LED) oder als Fotodiode betrieben werden können. Überdies kann der Einfluss von Störquellen wie insbesondere Fremdlicht, Temperatur, Spannungsschwankungen und Verschmutzung auf ein Minimum reduziert werden.

Bei einer bevorzugten praktischen Ausführungsform der erfindungsgemäßen Beleuchtungseinrichtung sind benachbarte Dioden der Leuchtdiodenanordnung abwechselnd gegensinnig ansteuerbar, so dass von den betreffenden Dioden jeweils wenigstens eine als Leuchtdiode und wenigstens eine als Fotodiode betrieben wird. In einer solchen abwechselnd gegensinnigen oder wechselphasigen Ansteuerung wird ein Flackern vermieden, wobei sichergestellt ist, dass stets wenigstens eine Diode als Fotodiode zur Verfügung steht.

Vorteilhafterweise wird mittels der Steuer- und/oder Auswerteeinheit anhand der Ausgangssignale der als Fotodiode betriebenen Dioden die jeweilige Lichtverteilung und/oder ein eventueller Ausfall einzelner Dioden innerhalb der Leuchtdiodenanordnung erfasst.

Alternativ oder zusätzlich kann mittels der Steuer- und/oder Auswerteeinheit anhand der Ausgangssignale der als Fotodiode betriebenen Dioden insbesondere auch die Leuchtstärke und damit eine eventuelle Alterung einzelner Dioden innerhalb der Leuchtdiodenanordnung erfasst werden.

Bei einer bevorzugten praktischen Ausführungsform der erfindungsgemäßen Beleuchtungseinrichtung liefert die Steuer- und/oder Auswerteeinheit nach Erfassung eines in der Leuchtdiodenanordnung auftretenden Fehlers wie insbesondere eines Diodenausfalls, eines Leuchtstärkeabfalls und/oder dergleichen ein Fehlersignal.

Die Ausgangssignale der als Fotodiode betriebenen Dioden werden zweckmäßiger über einen Multiplexer abgegriffen.

Die Ausgangssignale der als Fotodiode betriebenen Dioden können vor deren Auswertung einem Verstärker zugeführt werden.

Zur Ansteuerung der Leuchtdioden ist zweckmäßigerweise ein Treiber vorgesehen. Dabei können Eingänge des Multiplexers mit Ausgängen des Treibers verbunden sein.

Der Verstärker, der Multiplexer und/ oder der Treiber können der Steuerund/oder Auswerteeinheit zugeordnet sein.

Bei einer zweckmäßigen praktischen Ausführungsform sind jeweils mehrere Leuchtdioden in Reihe geschaltet und die Diodenreihenschaltungen so ansteuerbar, dass deren Dioden abwechselnd als Leuchtdioden und als Fotodioden betrieben werden, wobei in jeder Phase jeweils wenigstens eine Diodenreihenschaltung für einen Betrieb der zugehörigen Dioden als Leuchtdioden und wenigstens eine Diodenreihenschaltung für einen Betrieb der zugehörigen Dioden als Fotodioden angesteuert ist.

Vorteilhafterweise sind benachbarte Diodenzeilen und/oder -spalten der Leuchtdiodenanordnung abwechselnd gegensinnig ansteuerbar, so dass von den betreffenden Diodenzeilen bzw. -spalten jeweils wenigstens eine für einen Betrieb der zugehörigen Dioden als Leuchtdioden und wenigstens eine für einen Betrieb der zugehörigen Dioden als Fotodioden angesteuert ist. Dabei können die Dioden einer jeweiligen Diodenzeile bzw. - spalte insbesondere in Reihe geschaltet sein.

Erfindungsgemäß wird die eingangs angegebene Aufgabe überdies gelöst durch ein Verfahren zum Betreiben und/oder Überwachen einer insbesondere für Kraftfahrzeuge bestimmten Beleuchtungseinrichtung mit einer mehrere Leuchtdioden umfassenden Diodenanordnung, bei dem eine Streuscheibe oder dergleichen eingesetzt wird, die das von der Leuchtdiodenanordnung emittierte Licht teilweise durchlässt und teilweise zur Leuchtdiodenanordnung zurückreflektiert, eine jeweilige Diode abwechselnd als Leuchtdiode und als Fotodiode betrieben wird, wobei in jeder Phase jeweils wenigstens eine Diode als Leuchtdiode und wenigstens eine Diode als Fotodiode betrieben wird, und das Ausgangssignal einer jeweiligen als Fotodiode betriebenen Diode entsprechend ausgewertet wird.

Bevorzugte Ausgestaltungen des erfindungsgemäßen Verfahrens sind in den Unteransprüchen angegeben.

Die Erfindung wird im folgenden anhand eines Ausführungsbeispiels unter Bezugnahme auf die Zeichnung näher beschrieben; in dieser zeigen:
- Fig. 1: eine schematische Seitenansicht einer beispielhaften Ausführungsform einer Beleuchtungseinrichtung mit einer mehrere Leuchtdioden umfassenden Diodenanordnung und
- Fig. 2: ein vereinfachtes Schaltschema der Beleuchtungseinrichtung gemäß Fig. 1

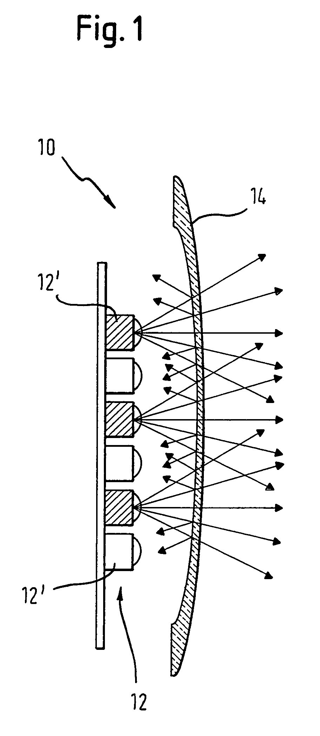

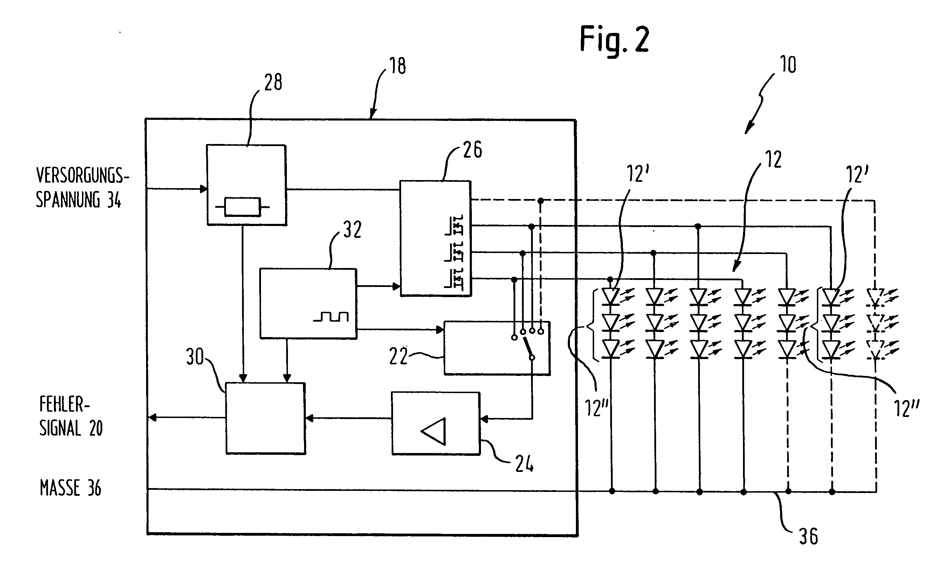

In den Fig. 1 und 2 ist in schematischer Darstellung eine beispielhafte Ausführungsform einer Beleuchtungseinrichtung 10 gezeigt. Eine solche Beleuchtungseinrichtung 10 kann insbesondere in Kraftfahrzeugen eingesetzt werden. Dabei kann es sich beispielsweise um einen Blinker und/oder dergleichen handeln. Grundsätzlich sind jedoch auch andere Verwendungsarten denkbar.

In der Fig. 1 ist die Beleuchtungseinrichtung 10 in schematischer Seitenansicht dargestellt. Ein vereinfachtes Schaltschema dieser Beleuchtungseinrichtung 10 ist in der Fig. 2 wiedergegeben.

Wie anhand der Fig. 1 und 2 zu erkennen ist, umfasst die Beleuchtungseinrichtung 10 eine Leuchtdiodenanordnung 12 sowie eine Streuscheibe 14 oder dergleichen, die das von der Leuchtdiodenanordnung 12 emittierte Licht teilweise durchlässt und teilweise zur Leuchtdiodenanordnung 12 zurückreflektiert.

Die Beleuchtungseinrichtung 10 umfasst überdies eine der Leuchtdiodenanordnung 12 zugeordnete elektronische Steuer- und/oder Auswerteeinheit 18. Durch diese Steuer- und/oder Auswerteeinheit 18 sind die Dioden 12' der Leuchtdiodenanordnung 12 so ansteuerbar, dass eine jeweilige Diode 12' abwechselnd als Leuchtdiode und als Fotodiode betrieben wird.

Dabei wird in jeder Ansteuerphase jeweils wenigstens eine Diode als Leuchtdiode und wenigstens eine Diode als Fotodiode betrieben. Das Ausgangssignal einer jeweiligen als Fotodiode betriebenen Diode 12' wird der Steuer- und/oder Auswerteeinheit zur Auswertung zugeführt.

Wie beispielsweise anhand der Fig. 1 zu erkennen ist, können benachbarte Dioden 12' der Leuchtdiodenanordnung 12 abwechselnd gegensinnig oder wechselphasig angesteuert werden, so dass von den betreffenden Dioden jeweils wenigstens eine als Leuchtdiode und wenigstens eine als Fotodiode betrieben wird. In der in der Fig. 1 wiedergegebenen Ansteuerphase werden die schraffierten Dioden 12' gerade als Leuchtdioden und die nicht schraffierten Dioden 12' gerade als Fotodioden betrieben. Das von den schraffierten Dioden 12' emittierte Licht wird von der Streuscheibe 14 teilweise zur Leuchtdiodenanordnung 12 und damit auch zu den nicht schraffierten, momentan als Fotodioden betriebenen Dioden 12' zurückreflektiert. Deren Ausgangssignale können somit zur Diagnose des Zustands der Leuchtdiodenanordnung 12 entsprechend ausgewertet werden.

In der nächsten Phase werden die Dioden 12' gegensinnig angesteuert, so dass die schraffierten Dioden 12' dann als Fotodioden und die nicht schraffierten Dioden 12' als Leuchtdioden betrieben werden. In jeder Phase sind einander benachbarte Dioden 12' gegensinnig angesteuert.

Mittels der Steuer- und/oder Auswerteeinheit 18 kann anhand der Ausgangssignale der jeweils als Fotodiode betriebenen Dioden beispielsweise die jeweilige Lichtverteilung und/oder ein eventueller Ausfall einzelner Dioden 12' innerhalb der Leuchtdiodenanordnung 12 erfasst werden. Alternativ oder zusätzlich kann mittels der Steuer- und/oder Auswerteeinheit 18 anhand der Ausgangssignale der jeweils als Fotodiode betriebenen Dioden 12' beispielsweise auch die Leuchtstärke und damit eine eventuelle Alterung einzelner Dioden 12' innerhalb der Leuchtdiodenanordnung 12 erfasst werden.

Dabei kann die Steuer- und/oder Auswerteeinheit 18 insbesondere so ausgelegt sein, dass sie nach Erfassung eines in der Leuchtdiodenanordnung 12 auftretenden Fehlers wie insbesondere eines Diodenausfalls, eines Leuchtstärkeabfalls und/oder dergleichen ein Fehlersignal 20 liefert.

Wie anhand der Fig. 2 zu erkennen ist, werden die Ausgangssignale der als Fotodiode betriebenen Dioden 12' beim vorliegenden Ausführungsbeispiel über einen Multiplexer 22 abgegriffen.

Die Ausgangssignale der als Fotodiode beschriebenen Dioden 12' können vor deren Auswertung einem Verstärker 24 zugeführt werden.

Zur Ansteuerung der Dioden 12' ist ein Treiber 26 vorgesehen.

Beim vorliegenden Ausführungsbeispiel sind die Eingänge des Multiplexers 22 mit den Ausgängen des Treibers 26 verbunden.

Im vorliegenden Fall sind der Verstärker 24, der Multiplexer 22 und der Treiber 26 der Steuer- und/oder Auswerteeinheit 18 zugeordnet, d.h. Teil dieser Steuer- und/oder Auswerteeinheit 18.

Gemäß Fig. 2 umfasst die Steuer- und/oder Auswerteeinheit 18 überdies einen Stromfüler 28, einen Steuermodul 30 sowie einen den Treiber 26, den Multiplexer 22 sowie den Steuermodul 30 beaufschlagenden Taktgenerator 32. Ein Ausgang des Stromfühlers 28 sowie ein Ausgang des Verstärkers 24 ist jeweils mit dem Steuermodul 30 verbunden. Der Stromfühler 28 ist im Eingangsbereich der an eine Spannungsversorgung 34 angeschlossenen Steuer- und/oder Auswerteeinheit 18 vorgesehen. Das Steuermodul 30 liefert bei einem erkannten Fehler das Fehlersignal 20.

Die Diodenanordnung 12 ist einerseits mit den Ausgängen des Treibers 26 und andererseits mit Masse 36 verbunden.

Wie anhand der Fig. 2 zu erkennen ist, sind beim vorliegenden Ausführungsbeispiel jeweils mehrere Leuchtdioden 12' in Reihe geschaltet. Die Diodenreihenschaltungen 12" sind über die Steuer- und/oder Auswerteeinheit 18 so ansteuerbar, dass deren Dioden 12' abwechselnd als Leuchtdioden und als Fotodioden betrieben werden. Dabei ist in jeder Ansteuerphase jeweils wenigstens eine Diodenreihenschaltung 12" für einen Betrieb der zugehörigen Dioden 12' als Leuchtdioden und wenigstens eine Diodenreihenschaltung 12" für einen Betrieb der zugehörigen Dioden 12' als Fotodioden angesteuert.

Es können beispielsweise benachbarte Diodenzeilen und/oder -spalten der Leuchtdiodenanordnung 12 abwechselnd gegensinnig oder wechselphasig angesteuert werden, so dass von den betreffenden Diodenzeilen bzw. -spalten jeweils wenigstens eine für einen Betrieb der zugehörigen Dioden 12' als Leuchtdioden und wenigstens eine für einen Betrieb der zugehörigen Dioden 12' als Fotodioden angesteuert ist. Hierbei können die Dioden 12' einer jeweiligen Diodenzeile bzw. -spalte insbesondere in der in der Fig. 2 dargestellten Weise in Reihe geschaltet sein.

Eine solche Beleuchtungseinrichtung 10 ermöglicht neben dem Ausfall einzelner Leuchtdioden 12' auch die Detektion eines Leuchtstärkeabfalls und damit der Alterung einzelner Leuchtdioden oder LEDs 12'. Dabei werden die Eigenschaften der Dioden 12' ausgenutzt, dass diese sowohl als Leuchtdiode als auch als Fotodiode betrieben werden können.

Die Diodenarrays können insbesondere so aufgebaut sein, dass benachbarte Dioden wechselphasig angesteuert werden können, wodurch ein Flackern vermieden wird und stets wenigstens eine Diode als Fotodiode nutzbar ist.

Durch die Streuscheibe 14 wird stets ein Teil des emittierten Lichts zurückreflektiert. Dieses Restlicht wird dann durch die als Fotodioden betriebenen Dioden detektiert (vgl. insbesondere Fig. 1). Nach einer Signalverstärkung mit nachgeschalteter Auswertung ist anhand der Empfangssignale der als Fotodiode betriebenen Dioden eine Aussage beispielsweise über die Lichtverteilung und eventuelle Ausfälle innerhalb der Leuchtdiodenanordnung 12 möglich (vgl. insbesondere Fig. 2).

Der Einfluss von Störquellen wie insbesondere Fremdlicht, Temperatur, Spannungsschwankungen und Verschmutzung auf das Diagnosesystem ist bedingt durch das hier angewandte Messverfahren auf ein Minimum reduziert.

### Bezugszeichenliste

- 10: Beleuchtungseinrichtung
- 12: Leuchtdiodenanordnung
- 12': Diode
- 12": Diodenreihenschaltung
- 14: Streuscheibe
- 18: Steuer- und/oder Auswerteeinheit
- 20: Fehlersignal
- 22: Multiplexer
- 24: Verstärker
- 26: Treiber
- 28: Stromfühler
- 30: Steuermodul
- 32: Taktgenerator
- 34: Spannungsversorgung
- 36: Masse

## Patentansprüche

1. Beleuchtungseinrichtung (10) insbesondere für Kraftfahrzeuge, mit einer mehrere Leuchtdioden (12') umfassenden Diodenanordnung (12), einer Streuscheibe (14) oder dergleichen, die das von der Leuchtdiodenanordnung (12) emittierte Licht teilweise durchlässt und teilweise zur Leuchtdiodenanordnung (12) zurück reflektiert, und einer der Leuchtdiodenanordnung (12) zugeordneten Steuerund/ oder Auswerteeinheit (18), durch die die Dioden (12') der Leuchtdiodenanordnung (12) so ansteuerbar sind, dass eine jeweilige Diode (12') abwechselnd als Leuchtdiode und als Fotodiode betrieben wird, wobei in jeder Phase jeweils wenigstens eine Diode (12') als Leuchtdiode und wenigstens eine Diode (12') als Fotodiode betrieben wird, und wobei das Ausgangssignal einer jeweiligen als Fotodiode betriebenen Diode (12') der Steuer- und/oder Auswerteeinheit zur Auswertung zugeführt wird.

2. Beleuchtungseinrichtung nach Anspruch 1,
**dadurch gekennzeichnet,**
**dass** benachbarte Dioden (12') der Leuchtdiodenanordnung (12) abwechselnd gegensinnig ansteuerbar sind, so dass von den betreffenden Dioden (12') jeweils wenigstens eine als Leuchtdiode und wenigstens eine als Fotodiode betrieben wird.

3. Beleuchtungseinrichtung nach Anspruch 1 oder 2,
**dadurch gekennzeichnet,**
**dass** mittels der Steuer- und/ oder Auswerteeinheit (18) anhand der Ausgangssignale der als Fotodiode betriebenen Dioden die jeweilige Lichtverteilung und/oder ein eventueller Ausfall einzelner Dioden (12') innerhalb der Leuchtdiodenanordnung (12) erfasst wird.

4. Beleuchtungseinrichtung nach einem der vorhergehenden Ansprüche,
**dadurch gekennzeichnet,**
**dass** mittels der Steuer- und/oder Auswerteeinheit (18) anhand der Ausgangssignale der als Fotodiode betriebenen Dioden (12') die Leuchtstärke und damit eine eventuelle Alterung einzelner Dioden (12') innerhalb der Leuchtdiodenanordnung (12) erfasst wird.

5. Beleuchtungseinrichtung nach einem der vorhergehenden Ansprüche,
**dadurch gekennzeichnet,**
**dass** die Steuer- und/oder Auswerteeinheit (18) nach Erfassung eines in der Leuchtdiodenanordnung (12) auftretenden Fehlers wie insbesondere eines Diodenausfalls, eines Leuchtstärkeabfalls und/oder dergleichen ein Fehlersignal (20) liefert.

6. Beleuchtungseinrichtung nach einem der vorhergehenden Ansprüche,
**dadurch gekennzeichnet,**
**dass** die Ausgangssignale der als Fotodiode betriebenen Dioden (12') über einen Multiplexer (22) abgegriffen werden.

7. Beleuchtungseinrichtung nach einem der vorhergehenden Ansprüche,
**dadurch gekennzeichnet,**
**dass** die Ausgangssignle der als Fotodiode betriebenen Dioden (12') vor deren Auswertung einem Verstärker (24) zugeführt werden.

8. Beleuchtungseinrichtung nach einem der vorhergehenden Ansprüche,
**dadurch gekennzeichnet,**
**dass** zur Ansteuerung der Dioden (12') ein Treiber (26) vorgesehen ist.

9. Beleuchtungseinrichtung nach Anspruch 8,
**dadurch gekennzeichnet,**
**dass** Eingänge des Multiplexers (22) mit Ausgängen des Treibers (26) verbunden sind.

10. Beleuchtungseinrichtung nach einem der vorhergehenden Ansprüche,
**dadurch gekennzeichnet,**
**dass** der Verstärker (24), der Multiplexer (22) und/oder der Treiber (26) der Steuer- und/ oder Auswerteeinheit (18) zugeordnet sind.

11. Beleuchtungseinrichtung nach einem der vorhergehenden Ansprüche,
**dadurch gekennzeichnet,**
**dass** jeweils mehrere Leuchtdioden (12') in Reihe geschaltet und die Diodenreihenschaltungen (12") so ansteuerbar sind, dass deren Dioden (12') abwechselnd als Leuchtdioden und als Fotodioden betrieben werden, wobei in jeder Phase jeweils wenigstens eine Diodenreihenschaltung (12") für einen Betrieb der zugehörigen Dioden (12') als Leuchtdioden und wenigstens eine Diodenreihenschaltung (12") für einen Betrieb der zughörigen Dioden (12') als Fotodioden angesteuert ist.

12. Beleuchtungseinrichtung nach einem der vorhergehenden Ansprüche,
**dadurch gekennzeichnet,**
**dass** benachbarte Diodenzeilen und/oder-spalten der Leuchtdiodenanordnung (12) abwechselnd gegensinnig ansteuerbar sind, so dass von den betreffenden Diodenzeilen bzw. -spalten jeweils wenigstens eine für einen Betrieb der zugehörigen Dioden (12') als Leuchtdioden und wenigstens eine für einen Betrieb der zugehörigen Dioden (12') als Fotodioden angesteuert ist.

13. Beleuchtungseinrichtung nach Anspruch 12,
**dadurch gekennzeichnet,**
**dass** die Dioden (12') einer jeweiligen Diodenzeile bzw. -spalte in Reihe geschaltet sind.

14. Verfahren zum Betreiben und/oder Überwachen einer insbesondere für Kraftfahrzeuge bestimmten Beleuchtungseinrichtung (10) mit einer mehrere Leuchtdioden (12') umfassenden Diodenanordnung (12), bei dem eine Streuscheibe (14) oder dergleichen eingesetzt wird, die das von der Leuchtdiodenanordnung (12) emittierte Licht teilweise durchlässt und teilweise zur Leuchtdiodenanordnung (12) zurückreflektiert, eine jeweilige Diode (12') abwechselnd als Leuchtdiode und als Fotodiode betrieben wird, wobei in jeder Phase jeweils wenigstens eine Diode (12') als Leuchtdiode und wenigstens eine Diode (12') als Fotodiode betrieben wird, und das Ausgangssignal einer jeweiligen als Fotodiode betriebenen Diode (12) entsprechend ausgewertet wird.

15. Verfahren nach Anspruch 14,
**dadurch gekennzeichnet,**
**dass** anhand der Ausgangssignale der als Fotodiode betriebenen Dioden (12') die jeweilige Lichtverteilung und/oder ein eventueller Ausfall einzelner Dioden (12') innerhalb der Leuchtdiodenanordnung (12) erfasst wird.

16. Verfahren nach Anspruch 14 oder 15,
**dadurch gekennzeichnet,**
**dass** anhand der Ausgangssignale der als Fotodiode betriebenen Dioden (12') die Leuchtstärke und damit eine eventuelle Alterung einzelner Dioden (12') innerhalb der Leuchtdiodenanordnung (12) erfasst wird.
